# EUROPEAN PATENT APPLICATION

(11) **EP 0 532 083 A1**
(43) Date of publication of application: **17.03.1993**
(21) Application number: 92202627.3
(22) Date of filing: 29.08.1992
(51) Int. Cl.: D01H 11/00, B01D 46/26

(54) **Self-cleaning filter box for spinning machines**

(30) Priority: 06.09.1991 IT MI912367
(71) Applicant: SAVIO S.p.A., I-33170 Pordenone (IT)
(72) Inventor: Mirri, Alessandro, I-40026 Imola (Bologna) (IT); Vernocchi, Vittorio, I-40026 Imola (Bologna) (IT)
(74) Representative: De Carli, Erberto

(57) **Abstract**

A filter box (1) for textile machines, in particular for ring spinning machines, comprising a motor-driven suction fan (8) and a rotary drum-type filter element (2) with which means (3) are associated for effecting automatic self-cleaning of the filter surface.

Said means are external to the rotary drum filter (2) in front of a deflector screen (27) which eliminates the air suction action on the filter surface, to allow removal of the web of filaments and impurities which has accumulated during each complete revolution of the rotary drum filter.

## Description

This invention relates to a filter box for textile machines, in particular for ring spinning machines, comprising means which provide effective continuous automatic self-cleaning of the filter surface.

In drafting systems in spinning preparation machines and spinning machines the yarn, which consists of an assembly of fibres of varying lengths, is subjected to considerable traction stresses resulting in separation of a certain quantity of in particular short fibres and the formation of trash. It is therefore necessary to clean the drafting members and remove the flying fibrillae and fibres and the trash through a manifold channel extending along the entire machine and terminating at the entry to a filter box provided with a motor-driven suction fan.

Filter boxes are already known in which the filter meshes (filter surfaces) are cleaned either manually or by an air stream flowing in the opposite direction to that in which the air stream of normal operation flows. These impurities are removed periodically either manually or by pneumatic action, for example by the switching of deflectors. It is apparent to any expert of the art that said known filter boxes can be used where the variations in the suction effect at the intake points along the entire machine do not have a disturbing effect on the operating process taking place in such machines. However the suction fluctuations in spinning preparation machines and spinning machines can, as often happens, lead to interruption of the productive process by breakage of the slivers and yarns under formation. A further disadvantage is that cleaning must be carried out by appropriate personnel. Unfortunately in some cases, especially in spinning machines, cleaning is required at a frequency of at least once per working shift because otherwise the pressure drop would rapidly reach a value such as to considerably reduce the suction at the spinning spindles. It can be assumed that on the whole the pressure drop through the filter surfaces is a few millimetres water gauge when the filter is clean, but can reach some tens of millimetres when the filter is clogged.

In any event, all said filter boxes are considerably difficult to operate. In this respect their main drawbacks are:
- the excessive frequency with which they have to be cleaned and the consequent need for the availability of suitable personnel for carrying out very unpleasant work at the required time;
- the need to halt the machine operation during the cleaning of the filter surfaces;
- considerable cleaning difficulty, especially if treating particularly moist and possibly "sized" fibrous trash;
- to achieve regular operation, the need to rely on a particular type of personnel who often have to carry out work of a very disagreeable nature, comparable in a certain sense to that of the one-time chimney sweep.

The aforesaid drawbacks, of which the last is certainly the most important, have resulted in an increasing development of filters with automatic cleaning. However such filters are considerably limited in use, mainly for reasons of investment cost and overall size, and in addition have a very high operating cost. For these reasons they are not of widespread use.

The object of the present invention is to provide a filter box in which, because of constant continuous removal of filaments from the filter surface, even minimum variations in the suction effect along the entire textile machine are eliminated, and which in addition overcomes the aforesaid drawbacks.

The filter box for textile machines, in particular for ring spinning machines, of the present invention comprises, external to the rotatable drum-type filter element, means which achieve automatic self-cleaning of the filter surface and a deflector screen in the form of a circular segment which eliminates the air suction action in the filter surface in front of said self-cleaning means, these removing the web of filaments and impurities which has accumulated on the filter surface during each complete revolution of the rotary drum.

The said means for achieving automatic self-cleaning of the filter surface are two longitudinal rollers extending parallel and external thereto along an entire filter generatrix of the rotary drum, said rollers being driven with intermittent rotary movement via two toothed flanges fixed to the ends of the rotary drum.

The said two end toothed flanges have toothed outer circumferences. That flange positioned at the opposite end to the fan also has internal toothing which enables a mechanism to produce intermittent rotary movement of the filter element, which rotates in the same direction of rotation.

To achieve the aforesaid concept the present invention therefore comprises two longitudinal self-cleaning rollers which are in contact with each other and both of which adhere to the circumferential filter surface in front of the deflector screen, said longitudinal rollers rotating in opposite directions, the directions of rotation being such as to remove away from the filter surface the filament web by pinching it between themselves in order to convey it into an underlying container.

A non-limiting embodiment of the invention is described hereinafter with reference to the accompanying figures.

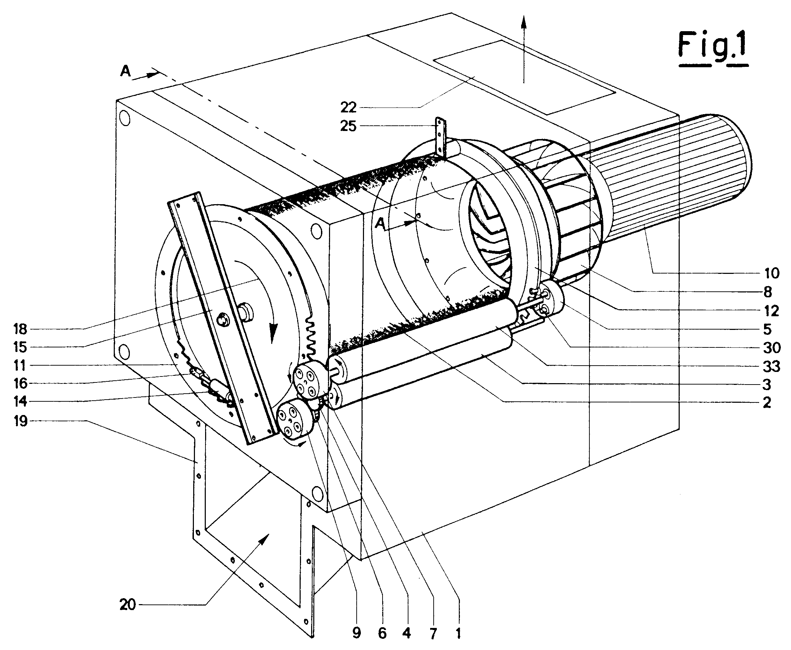

Figure 1 is a schematic axonometric perspective view of the filter box associated with a motor-driven suction fan and comprising an entry port and an exit aperture, said figure also showing the rotary drum-type filter element and the external rollers which effect the automatic self-cleaning of the entire filter surface.

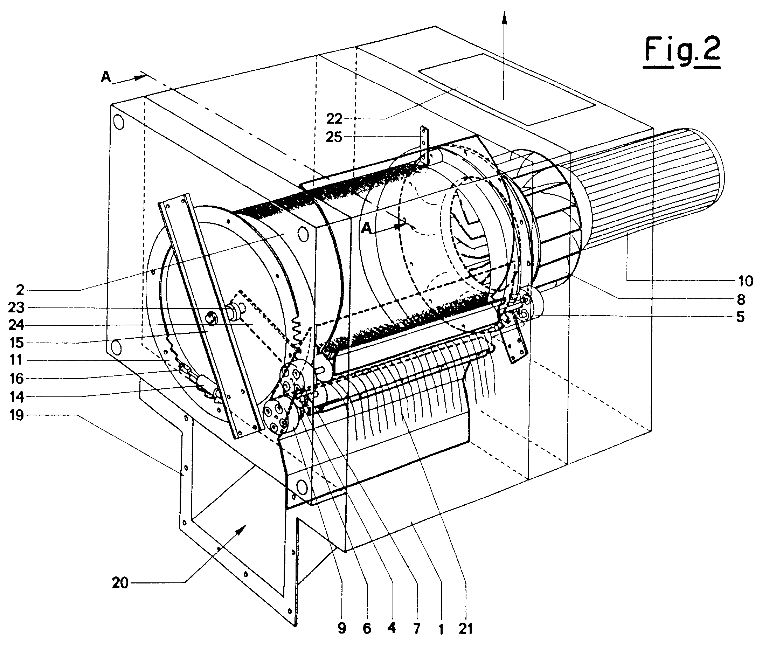

Figure 2 is a schematic axonometric perspective view of the filter box of Figure 1 at the moment in which the longitudinal rollers are removing the web of filaments and impurities, said figure also showing the deflector screen which eliminates the air suction action on the filter surface in front of the longitudinal self-cleaning rollers.

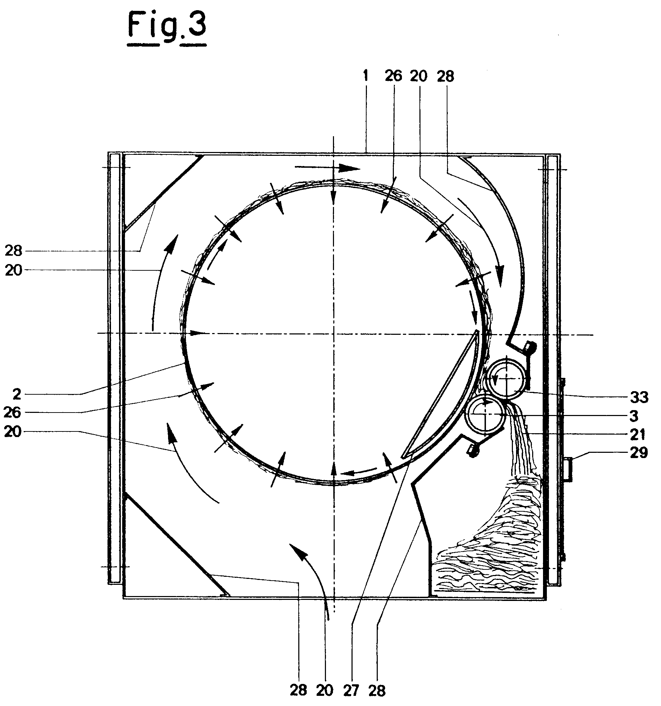

Figure 3 is a schematic section on the line A-A of Figure 2, said figure showing the underlying accumulation of the filament web removed from the filter surface by the pinching action of the longitudinal rollers.

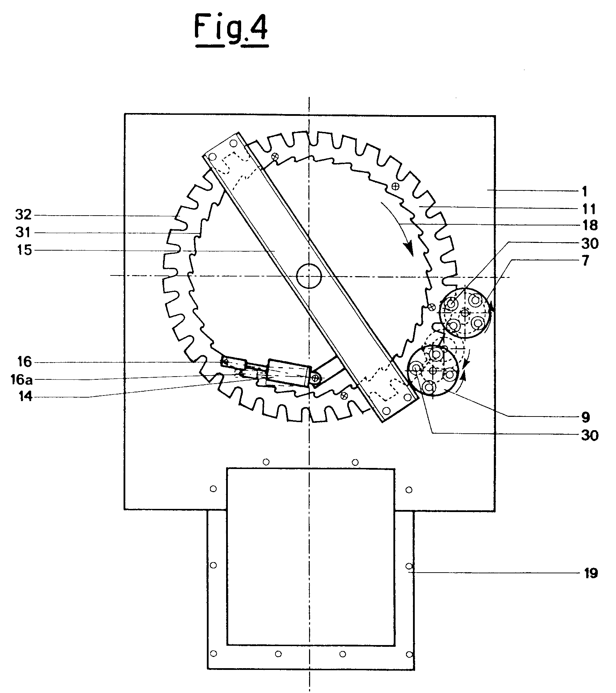

Figure 4 is a schematic front view of the filter box with the entry port and the toothed flange fixed to the front end of the rotary drum-type filter element, said figure also showing the mechanism for producing intermittent rotary movement of the filter element, always in the same direction of rotation.

In the figures for reasons of overall clarity the parts not necessary to the invention, such as the inlet manifold channel, the pneumatic circuit for effecting the intermittent rotary movement, and other parts, are omitted as they are already known and because they do not concern the operation of the present invention.

In the accompanying drawings:
1 is the casing representing the outer structure of the filter box, which draws trash via the entry port 20, which is flanged at its edge 19 where it is connected to the terminal end of a suction manifold channel extending along the entire machine; 2 is the filter element shaped as a circumferential drum, said element 2 consisting of a simple filter mesh of thin metal wires woven to form fairly dense apertures. The number of apertures per centimetre squared of mesh varies according to the type and quality of fibres present in the intake air. A dense mesh is obviously preferred for better filtration, this making continuous and effective automatic cleaning necessary, as enabled by the filter box of the invention, in order to achieve a low pressure drop and hence a low energy consumption; 3 and 33 are the two longitudinal rollers external to the filter surface 2, said rollers achieving automatic self-cleaning by pinching the filament web 21 between them, this being removed from the circumferential surface 2 and conveyed into an underlying container; 6 and 4 are two gear wheels which transmit rotary motion from the pin wheel 9 to the longitudinal roller 3; 7 and 5 are two pin wheels which engage the outer toothing of the toothed flanges 11, these latter being fixed to the ends of the filter element 2. Said pin wheels 7 and 5 are directly rigid with the longitudinal roller 33, the pivots of which are housed at its ends in supports which are sufficiently slotted to allow the pinching and extraction of filament webs of varying thickness; 9 is the pin wheel which receives rotary motion from the outer toothing 32 of the flange 11 and transmits it to the longitudinal roller 3 via the gear wheels 6 and 4, which impose on it a direction of rotation 3 which is the same as the direction of rotation 18 of the filter surface 2; 30 are the pins projecting from the wheels 9, 7 and 5, said pins having the same function as teeth engaging with the outer toothings of the two end flanges 11 and 12; 8 is the impeller of the motor-driven suction fan operated by the motor 10; 22 is the exit aperture which outwardly conveys the air filtered of the impurities and filaments, this hence being clean air; 25 and 15 are support and fixing brackets between the filter drum 2 and the outer structure 1; 23 is the pivot about which the rotary drum 2 rotates; 27 is the deflector screen positioned on the inside of the circumferential surface 2 in front of the longitudinal rollers 3 and 33; 24 is the bracket which supports the deflector screen 27 from the central pivot 23 of the rotary drum 2; 16 is the pusher element of the pneumatic actuator 14, said pusher 16 engaging the inner toothing 31 of the flange 11 to cause the filter drum 2 to rotate intermittently as indicated by 18; 28 are sheet metal screens for optimizing the passage spaces for the external air originating from the entry manifold 20. Said external air is conveyed about the filter surface 2 in the direction indicated by the arrows 20 and flow into the filter drum 2 in the direction of the radial arrows 26 under the forced sucking action of the suction fan 8; 29 is a door for the periodic extraction of the fibres and impurities which accumulate in the region below the rollers 3 and 33, which effect the automatic self-cleaning of the filter surface 2.

The operation of the self-cleaning filter box of the present invention is clear from the aforegoing.

The fan 8 is operated to draw the air to be filtered through the entry port 20. The air drawn by the suction action passes into the rotary drum 2, leaving the fibres and impurities on the filter surface. Simultaneously with said air filtration, by which the fibres are retained on the surface 2, intermittent rotary movement is produced by the action of the pusher 16 against the tooth projections 31 of the flange 11. In this respect, the actuator 14 causes its rod to move alternately to and fro longitudinally to move the pusher stepwise from the position 16a to the position 16 and vice versa (see Figure 4). The actuator 14 is articulatedly connected to allow the pusher 16 to rest by gravity on the crest of the tooth 31.

Detailed modifications can be made to the self-cleaning filter box of the present invention, but without leaving the scope of the inventive idea as claimed below.

## Claims

1. A filter box for textile machines, comprising an entry port flanged for its connection to the terminal end of a manifold channel which extends along the entire machine, a filter element in the form of a rotary drum, a motor-driven suction fan and an exit aperture at the cleaned air end, said filter box being characterised in that means are provided external to the filter element to effect automatic self-cleaning of the filter surface, a deflector screen being provided internal to the filter element to eliminate air suction action on the filter surface in front of said self-cleaning means, which remove the filament and impurity web which has accumulated on the filter surface during each complete revolution of this latter.

2. A filter box for textile machines as claimed in claim 1, characterised in that the means which effect the automatic self-cleaning of the surface are two outer longitudinal rollers extending parallel to and along the entire filter surface, said rollers being driven with intermittent rotary motion via two toothed flanges fixed to the ends of the rotary drum-type filter element.

3. A filter box for textile machines as claimed in claim 2, characterised in that the toothed end flanges have toothed outer circumferences, one of said flanges, namely that at the opposite end to the fan, also comprising inner toothing for a mechanism which rotates the filter element with intermittent rotary movement always in the same direction.

4. A filter box for textile machines as claimed in claim 2, characterised in that the longitudinal self-cleaning rollers are in mutual contact and both adhere to the filter surface in front of the deflector screen, said longitudinal rollers rotating in opposite directions, the directions of rotation being such as to remove the filament web pinched between them outwards away from the filter surface, to convey it into an underlying container.

5. A filter box for textile machines as claimed in claims 1 and 4, characterised in that the deflector screen internal to the filter element in front of the outer longitudinal rollers is substantially in the form of a circular segment.
